(19) Europäisches Patentamt
European Patent Office
Office européen des brevets

(11) **EP 1 670 094 B1**

(12) **EUROPEAN PATENT SPECIFICATION**

(45) Date of publication and mention
of the grant of the patent:
**31.05.2017 Bulletin 2017/22**

(51) Int Cl.:
***H01Q 3/26*** *(2006.01)*

(21) Application number: **05026272.4**

(22) Date of filing: **01.12.2005**

(54) **Smart antenna communication system for signal calibration**

Verfahren zur Kalibrierung eines intelligenten Gruppenantennensystems

Procédé de calibration d'un système d'antenne intelligente

(84) Designated Contracting States:
**DE FR GB IT SE**

(30) Priority: **02.12.2004 KR 2004100181**

(43) Date of publication of application:
**14.06.2006 Bulletin 2006/24**

(73) Proprietor: **Samsung Electronics Co., Ltd.**
**Suwon-si, Gyeonggi-do, 443-742 (KR)**

(72) Inventors:
• **Chae, Heon-Ki**
**Gyeonggi-do (KR)**
• **Kwon, Young-Hoon**
**Gyeonggi-do (KR)**
• **Yang, Jang-Hoon**
**Gyeonggi-do (KR)**

(74) Representative: **Grünecker Patent- und**
**Rechtsanwälte**
**PartG mbB**
**Leopoldstraße 4**
**80802 München (DE)**

(56) References cited:
**EP-A- 1 329 983      US-A- 5 499 031**
**US-B1- 6 208 287**

• **PATENT ABSTRACTS OF JAPAN vol. 2003, no. 12, 5 December 2003 (2003-12-05) & JP 2003 273634 A (TOSHIBA CORP), 26 September 2003 (2003-09-26)**

**Description**

The present invention relates generally to a calibration apparatus and method for controlling the phase and amplitude of a signal in a smart antenna multicarrier communication system, and in particular, to an apparatus and method for transmitting a calibration signal on the remaining carriers after allocating data to carriers, thereby increasing the efficiency of frequency resource utilization for the data signal.

A smart antenna system is a communication system that uses a plurality of antennas to automatically optimize a radiation pattern and/or a reception pattern according to a signal environment. From the perspective of data signal transmission, the smart antenna system transmits a signal with a desired strength in an intended direction at a minimum power level by beamforming. The use of the smart antenna enables a Base Station (BS) to direct a signal only to a desired Mobile Station (MS) through beamforming. Therefore, compared to omnidirectional signal transmission to all MSs, the smart antenna reduces power required for signal transmission and interference, as well. Since the smart antenna applies directionality to a transmission/received signal by actively locating an intended MS, interference to other MSs within the same cell can be minimized. Thus, the BS can allocate the remaining available power to other MSs and the reduced interference with other cells leads to the increase of BS channel capacity.

A wireless internet service system based on Orthogonal Frequency Division Multiple Access (OFDMA) uses a wide frequency bandwidth and transmits a signal from a BS to one MS at a higher power level than in a conventional system. Thus, a cell radius is small. Application of the smart antenna to the wireless internet system advantageously increases BS channel capacity.

In application of the smart antenna system to a multicarrier OFDMA system, beamforming is performed by using a beamforming weight vector for each orthogonal frequency carrier of each antenna such that each antenna beam is steered in a chosen direction. The beams must reach the antennas without any change prior to transmission over the air, but they experience distortions in their phase and amplitude due to non-linear components in the BS. Thus, calibration is needed to control the phase and amplitude of the signals. The total performance of the smart antenna technology depends on the accuracy of the calibration, that is, the accuracy of beam directionality and minimization of phase mismatch. The calibration is commonly applied to a downlink directed from a BS to an MS and an uplink directed from an MS to a BS.

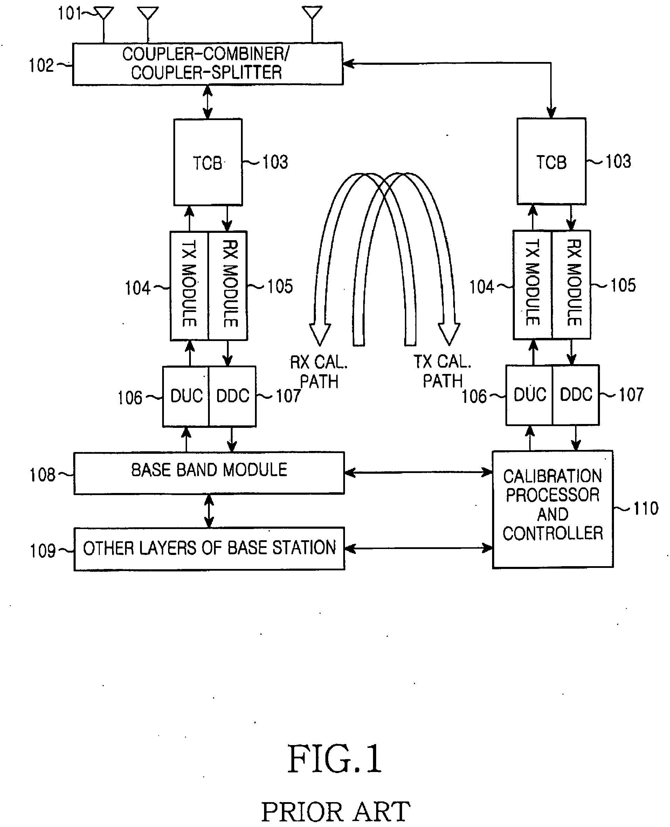

FIG. 1 is a block diagram of a conventional calibration apparatus in a smart antenna system. Referring to FIG. 1, a transmission (Tx) calibration signal is transferred in the following manner. First, a calibration signal generated from a calibration processor and controller 110 under the control of other layers of the BS 109 is provided to a baseband module 108. The calibration signal is then transmitted to antennas 101 through a Radio Frequency (RF) module. The RF module oversamples the calibration signal in a Digital UpConverter (DUC) 106, modulates the oversampled signal to an RF signal in a Tx module 104, and transmits the modulated signal to the antennas 101 through a Transceiver Control Board (TCB) 103 and a coupler-splitter 102. Meanwhile, the calibration signal is coupled in the coupler-splitter 102 and transferred in a calibration path. Specifically, this calibration signal returns to the calibration processor and controller 110 through a TCB 103, a reception (Rx) module 105, and a Digital DownConverter (DDC) 107 in a Tx calibration path.

As to an Rx calibration signal, a calibration signal generated from the calibration processor and controller 110 passes through a DUC 106, a Tx module 104, and a TCB 103 in an Rx path and is coupled to signals received at the antennas 101 in a coupler-combiner 102. The coupled signal returns to the calibration processor and controller 110 through a TCB 103, an Rx module 105, a DDC 107, and the baseband module 109 in an Rx calibration path.

As described above, calibration vectors are estimated for Tx calibration and Rx calibration by computing differences in phase and amplitude between calibration signals generated from the calibration processor and controller 110 and the calibration signals fed back from the Tx and Rx paths.

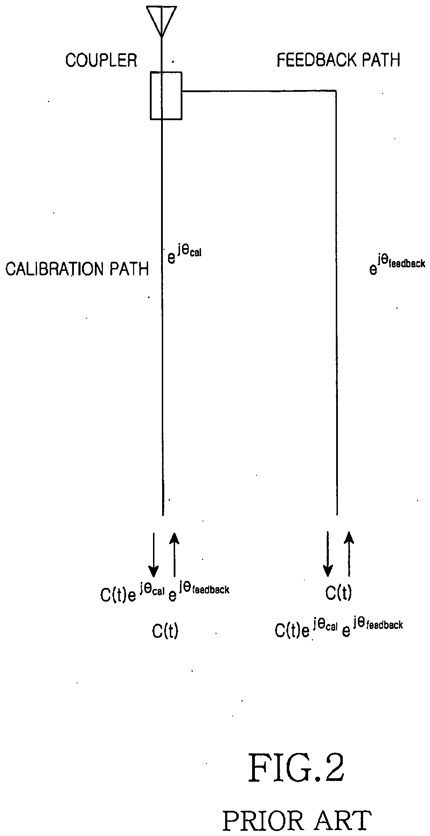

FIG 2 illustrates the principle of calibration in the conventional smart antenna system. A Tx or Rx calibration signal C(t) experiences variations in its phase and amplitude as it travels in a path running to antennas and in a feedback path. Given N antennas, the calibration signal C(t) is received from N paths. Thus, according to Equation 1:

$$C_1(t) = \alpha_1 C(t) e^{j\theta_{1,cal}} e^{j\theta_{feedback}}$$
$$C_2(t) = \alpha_2 C(t) e^{j\theta_{2,cal}} e^{j\theta_{feedback}}$$
$$\vdots$$
$$C_N(t) = \alpha_N C(t) e^{j\theta_{N,cal}} e^{j\theta_{feedback}}$$

$$\ldots\ldots\ldots\ldots(1)$$

where $C_n(t)$ denotes a feedback calibration signal from an $n^{th}$ path and $\alpha_n$ denotes attenuation in the $n^{th}$ path. $\theta_{N,cal}$ is a phase factor for $n^{th}$ path and $\theta_{feedback}$ is a phase factor for feedback path.

For calculation of a calibration vector, a coupler characteristic $R_{coupter}$ from each path must be eliminated and for beamforming, the relative phases of the N antennas must be matched. Calibration vectors are computed by Equation 2.

$$w_{c,1} = conj\left[\frac{C_1(t)/R_{coupter1}}{C(t)}\right].$$

$$w_{c,2} = conj\left[\frac{C_2(t)/R_{coupter2}}{C(t)}\right]$$

$$\vdots$$

$$w_{c,N} = conj\left[\frac{C_N(t)/R_{coupterN}}{C(t)}\right]$$

$$\dots\dots\dots(2)$$

Assuming that beamforming weight vectors for antennas are $W_{b1}$, $W_{b2}$, $W_{bn}$, beamforming weight vectors calculated taking antenna paths into account are $W_{b1}W_{c1}$, $W_{b2}W_{c2}$, $W_{bn}W_{cn}$.

The calibration must be performed periodically for all carriers to use the smart antenna in a multicarrier communication system such as OFDMA. This calibration requires allocation of frequency resources to a calibration signal. However, the additional frequency resource allocation for the calibration signal leads to dissipation of frequency resources and thus there is a need for a technique of solving this problem.

JP 2003 273634 A refers to an array antenna device in which a calibration is performed without stopping a receiving function in the array antenna device. For this, a phase deviation arithmetic circuit carries out the calibration by introducing a calibration signal from a calibration signal generation circuit based upon selected synchronous switching operations to first and second switchers, when composing signals from respective antenna elements via phase shifters. Therefore, the other receiving system, except for a switched and selected receiving system, continues an ordinary receiving operation based upon a formed received beam pattern without being stagnated.

US 6,208,287 B1 describes a phased array antenna calibration system and a respective method thereof. The described self-contained calibration and failure detection in a phase array antenna has a beam-forming network. The beam-forming network includes a plurality of array ports and a plurality of beam ports or a space fed system. A plurality of antenna elements and a plurality of transmit/receive modules are included. Each one of the modules is coupled between a corresponding one of the antenna elements and a corresponding one of the array ports. Additionally, a calibration system is provided which has an RF input port, an RF detector port, an RF detector coupled to the RF detector port, and an antenna element port. Furthermore, a switch section is included for sequentially coupling each of the antenna elements through the beam-forming/space-fed network and the one of the transmit/receive modules coupled thereto selectively to either the detector port during a receive calibration mode or to the RF input port during a transmit calibration mode. Additionally, the switch section includes a switch for selectively coupling a predetermined one of the antenna elements, i.e. a calibration antenna element, selectively to either the RF test input of the calibration system during the receive calibration mode through a path isolated from the beam-forming network or to the detector port during the transmit calibration mode through a path isolated from the beam-forming network.

US 5,499,031 refers to a distributed receiver system for antenna array. It describes that in an antenna array of large dimensions, such as might be used for high frequency radar, the antennas will be connected by short feeders to receivers which will consequently be distributed over a considerable distance. Calibration of such an antenna array to compensate for variations in the transfer functions of the receivers will necessitate the same test signal being fed into each element in turn to measure the receiver output, and this could be time consuming and hence reduce the time available for use of the array. In order to overcome this disadvantage, a loop is connected at various tappings to the feeders, the respective antennas are disconnected, and sinusoidal tones are injected into the left hand and right hand ends of the loop. The outputs of the receivers are measured, and provide a measure of the transfer functions of the receivers and hence enable discrepancies between them to be corrected.

EP 1 416 655 refers to a calibration method in an OFDM system and injects calibration signals along the multiple subcarriers used in that OFDM system. Accordingly, an object of the present invention is to provide an improved calibration apparatus and method for controlling the phase and amplitude of a signal in a smart antenna multicarrier communication system.

This object is solved by the present invention and, in particular, by the subject matter of the independent claims.

Preferred embodiments are subject matter of the dependent claims

An aspect of the present invention is to provide a calibration apparatus and method for transmitting a calibration signal by which to control the phase and amplitude of a signal on the remaining carriers after allocating data to carriers, thereby increasing the efficiency of frequency resource utilization for the data signal in a smart antenna multicarrier communication system.

The above aspect is achieved by providing a calibration apparatus and method for controlling the phase and amplitude of a signal in a smart antenna multicarrier communication system.

According to one aspect of the present invention, in a smart antenna communication system, a scheduler allocates a data signal to a plurality of carriers as data carriers, provides the data signal to a baseband processor, and controls a calibration processor and controller to generate a calibration signal to be allocated to non-data carriers to which the data signal is not allocated. The calibration processor and controller generates the calibration signal on the non-data carriers under the control of the scheduler and calculates a calibration vector using the calibration signal and a feedback calibration signal (the calibration signal passed through a transmission path). The baseband processor calibrates a beamforming weight vector for a data signal with the calibration vector and transmits the calibrated data signal in the transmission path.

According to another aspect of the present invention, in a signal calibration method in a smart antenna communication system, a data signal is allocated to a plurality of carriers as data carriers. A calibration signal is allocated to non-data carriers to which the data signal is not allocated and transmitted in a transmission path. A calibration vector is calculated using the calibration signal and a feedback calibration signal received from the transmission path. A beamforming weight vector is calibrated for the data signal using the calibration vector and the calibrated data signal is transmitted in the transmission path.

In these two systems, a time threshold is predetermined so that, unless a specific carrier to which the calibration signal was allocated has the calibration signal applied again within that time threshold, the calibration signal is forcibly allocated to the carrier so that the calibration signal is allocated across the total frequency band periodically. The above and other objects, features and advantages of the present invention will become more apparent from the following detailed description when taken in conjunction with the accompanying drawings in which:

FIG 1 is a block diagram of a conventional signal calibration apparatus in a smart-antenna communication system;

FIG. 2 illustrates the principle of signal calibration in the smart-antenna communication system;

FIG. 3 illustrates allocation of carriers to a data signal in a smart-antenna communication system according to the present invention;

FIG. 4 is a block diagram of a calibration apparatus in a smart antenna system according to the present invention;

FIG. 5 illustrates the configuration of a baseband processor in the smart antenna system according to the present invention;

FIG. 6 is a block diagram of a scheduler in the smart antenna system according to the present invention;

FIG 7 is a block diagram of a calibration signal generator in the smart antenna system according to the present invention;

FIG. 8 is a block diagram of a calibration vector processor in the smart antenna system according to the present invention;

FIG. 9 is a flowchart illustrating an operation for allocating carriers to a calibration signal in the smart antenna system according to the present invention;

FIG. 10 is a flowchart illustrating an operation for estimating a calibration vector in the smart antenna system according to the present invention; and

FIGs. 11A and 11B illustrate the values of feedback calibration signals in the smart antenna system according to the present invention.

A preferred embodiment of the present invention will be described herein below with reference to the accompanying drawings. In the following description, well-known functions or constructions are not described in detail since they would obscure the invention in unnecessary detail.

Periodic calibration is needed for all carriers in application of a smart antenna to a multicarrier communication system like an Orthogonal Frequency Division Multiplexing (OFDM) or an Orthogonal Frequency Division Multiple Access (OFDMA) communication system.

A description will first be made of carrier allocation to data in such a communication system.

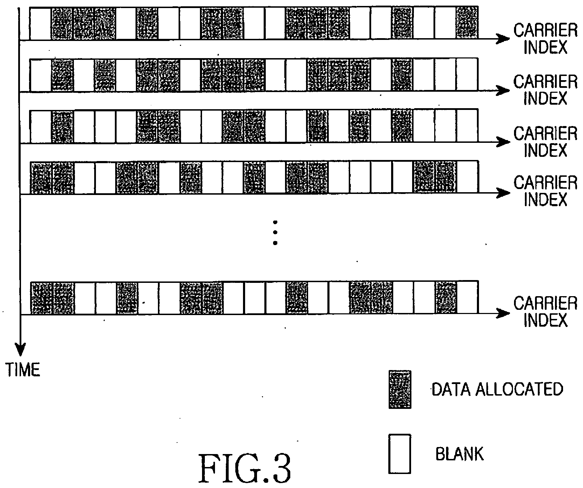

FIG. 3 illustrates allocation of carriers to a data signal in a smart-antenna communication system according to the present invention. Referring to FIG. 3, shaded squares denote areas with data signals and blank squares denote areas without data signals, somme of which are allocated to a calibration signal. An example of allocating carriers to data over time is shown herein. As different MSs are connected to a BS with passage of time, the allocation of frequency resources to data changes correspondingly, and carriers without data also change with passage of time, as well.

It is possible to calibrate carriers without data by mapping a calibration signal to the non-data carriers. Continuous calibration of the non-data carriers for a predetermined period of time leads to calibration across a total frequency band. For efficient calibration of the total frequency band, therefore, the non-data carriers must be uniformly distributed across the total frequency band. In addition, unless a specific carrier to which the calibration signal was allocated has the calibration signal applied again a predetermined time later (Time_threshold), the calibration signal must be forcibly allocated to the carrier so that the calibration signal is allocated across the total frequency band periodically.

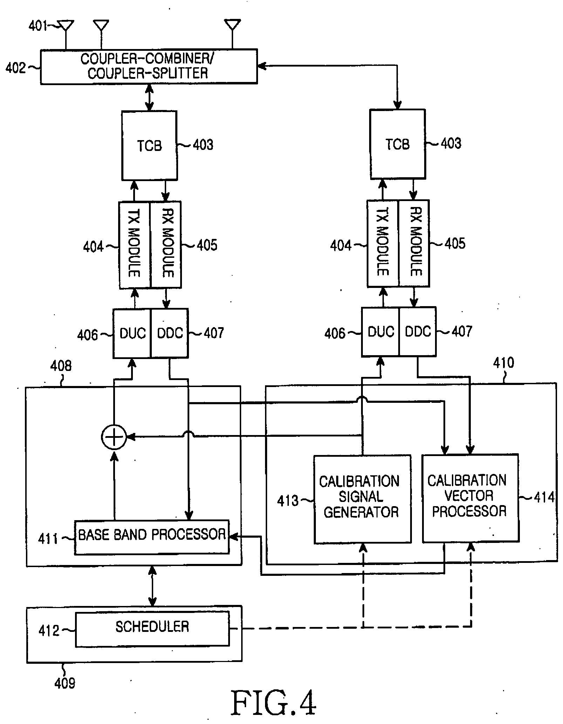

FIG. 4 is a block diagram of a calibration apparatus in a smart antenna system according to the present invention. Referring to FIG. 4, reference numerals 401 to 410 denote the same components 101 to 110 illustrated in FIG. 1. Reference numerals 411 to 414 denote components further provided according to the present invention, for allocating a calibration signal to carriers and estimating calibration vectors. A scheduler 412 allocates a data signal to carriers taking into account calibration in each symbol and provides the data signal to a baseband processor 411. The scheduler 412 also controls a calibration signal generator 413 and a calibration vector processor 414. Specifically, the scheduler 412 controls the calibration signal generator 413 to generate the calibration signal on non-data carriers and controls the calibration vector processor 414 to compute a calibration vector using a feedback calibration signal that has passed through a feedback path. This calibration signal is transmitted/received for Tx calibration and Rx calibration in the same manner as illustrated in FIG. 1.

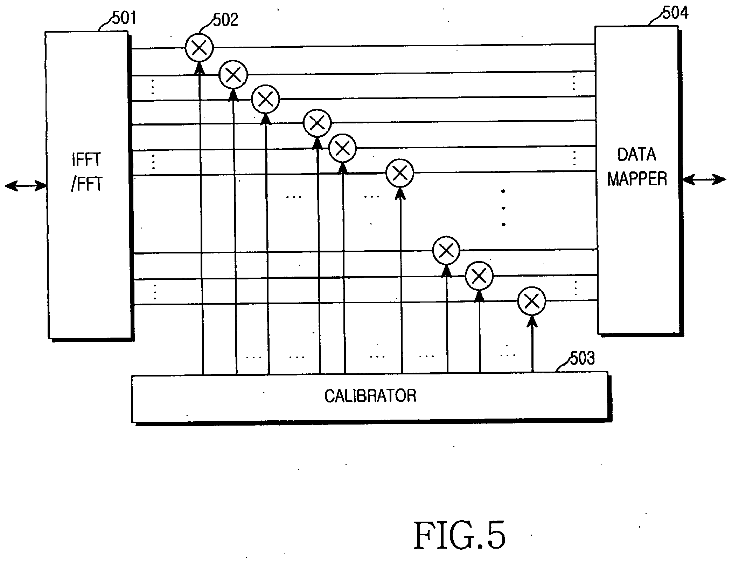

FIG 5 illustrates the configuration of the baseband processor 411 in the smart antenna system according to the present invention. Referring to FIG. 5, the baseband processor 411 in the baseband module 408 receives calibration vectors from the calibration vector processor 414 of the calibration processor and controller 410. In a Tx path from the BS to an MS, a data mapper 504 maps non-data carriers to multipliers 502. A calibrator 503 provides the calibration vectors to multipliers 502. The multipliers 502 multiply the carrier signals with the calibration vectors and an inverse fast Fourier transform (IFFT)/FFT processor 501 modulates the products by IFFT.

In an Rx path from the MS to the BS, the above operation for the Tx path is reversed. The IFFT/FFT 501 demodulates a received data signal by FFT. The calibrator 503 applies the calibration vectors received from the calibration vector processor 414 to the FFT signals.

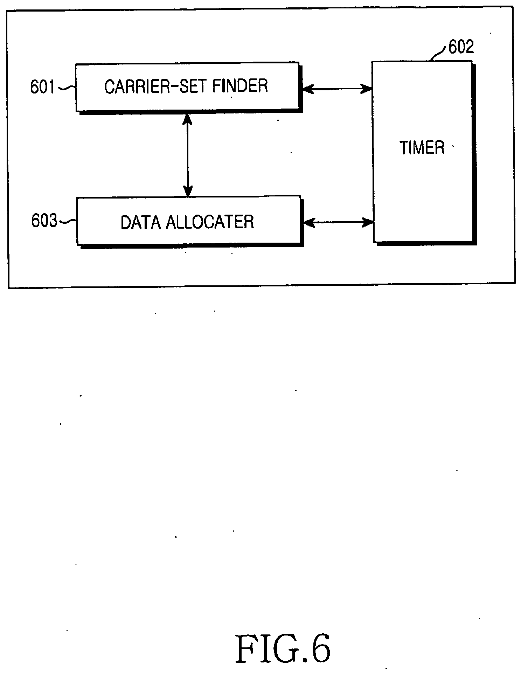

FIG. 6 is a block diagram of the scheduler 412 in the smart antenna system according to the present invention. Referring to FIG. 6, the scheduler 412 functions to allocate a calibration signal to carriers by controlling the calibration signal generator 413. A carrier-set finder 601 finds carriers whose timer values do not exceed a threshold (Time_threshold) as data carriers to which data can be allocated. A data allocater 603 allocates data to the carriers found by the carrier-set finder 601. A timer 602 updates its timer value for a corresponding data carrier to which the data allocater 603 has allocated data.

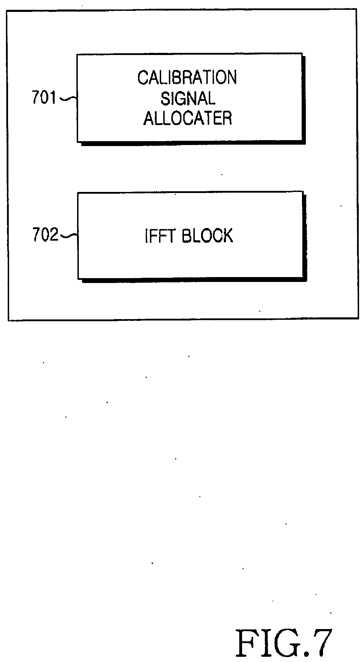

FIG 7 is a block diagram of the calibration signal generator 413 in the smart antenna system according to the present invention. Referring to FIG 7, the calibration signal generator 413 includes a calibration signal allocater 701 and an IFFT processor 702. The calibration signal allocater 701 allocates a calibration signal to non-data carriers based on carrier-data allocation information received from the scheduler 412. The IFFT processor 702 modulates the calibration carrier signals by IFFT.

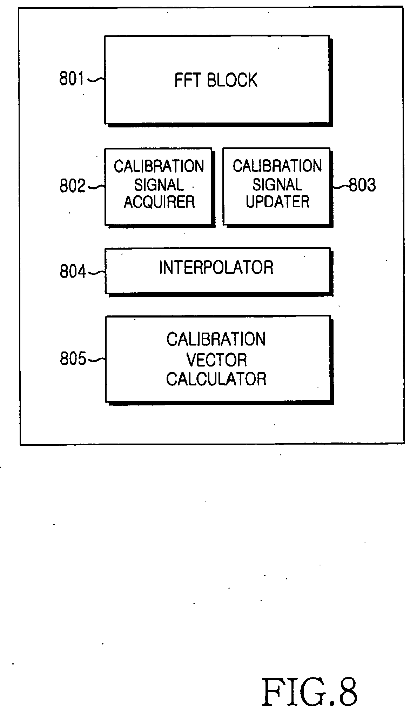

FIG. 8 is a block diagram of the calibration vector processor 414 in the smart antenna system according to the present invention. Referring to FIG 8, the calibration vector processor 414 includes an FFT processor 801, a calibration signal acquirer 802, a calibration signal updater 803, an interpolator 804, and a calibration vector calculator 805. The FFT processor 801 separates a feedback calibration signal by carriers. The calibration signal acquirer 802 measures the phase and amplitude of the feedback calibration signals of calibration carriers according to calibration carrier position information received from the scheduler 412. The calibration signal updater 803 updates the phase and amplitude information each time and stores it in a memory. The interpolator 804 interpolates the stored phase and amplitude information, thereby estimating the phases and amplitudes of the calibration signal on carriers to which the calibration signal was not allocated. The interpolation is carried out in the case where a large number of MSs are connected to the BS. The calibration vector calculator 805 calculates calibration vectors after eliminating coupler characteristics from the feedback calibration signal.

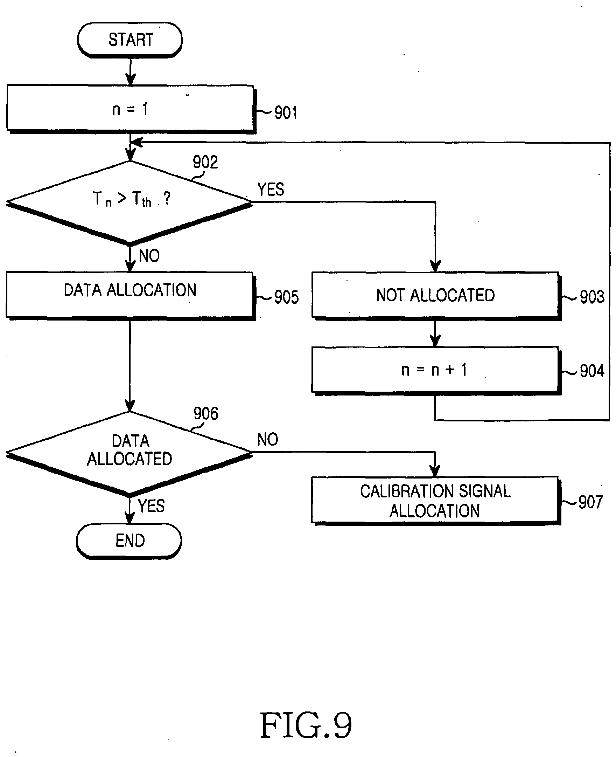

FIG. 9 is a flowchart illustrating an operation for allocating carriers to a calibration signal in the smart antenna system according to the present invention. Referring to FIG. 9, a timer for each carrier is reset to 0 before the BS operates. A variable n indicating a carrier is set to 1 in step 901. In step 902, the timer value of the $n^{th}$ carrier is compared with a timer threshold (Time_threshold). If timer value of the $n^{th}$ carrier is greater than the threshold, the $n^{th}$ carrier is excluded as unavailable as a data carrier in step 903. In this case n is updated to n+1 in step 904 and returned to step 902. On the other hand, if timer value of the $n^{th}$ carrier is not greater than the threshold, the $n^{th}$ carrier may be data carriers in step 905. Because the data is not allocated to all data carriers, carriers for which the data is not allocated may exist. In step 906, it is confirmed whether data is allocated. If data is not allocated, then a calibration signal is allocated to such a non-data carrier in step 907. A symbol having the calibration signal and the data signal is then transmitted.

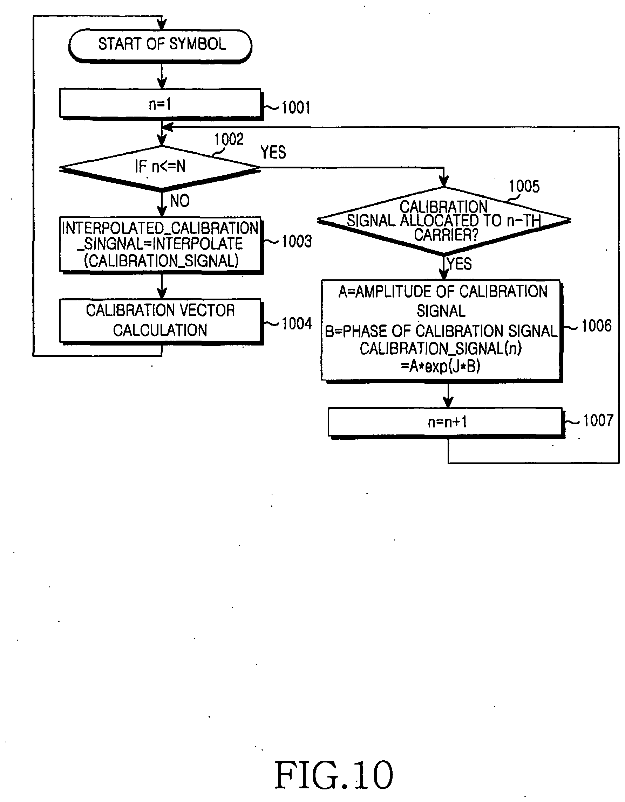

FIG 10 is a flowchart illustrating an operation for estimating a calibration vector in the smart antenna system according to the present invention. Referring to FIG. 10, a variable n indicating a carrier is set to 1 in step 1001. If $n^{th}$ is less than N(total number of carriers), it is confirmed in step 1005 whether a calibration signal was allocated to $n^{th}$ carrier. If a calibration signal was allocated to the $n^{th}$ carrier, then the calibration signal response on the calibration carriers is received and the phase and amplitudes of the calibration carriers are stored in a memory in step 1006. For an $n^{th}$ carrier, if it carries the calibration signal, the memory, which has already stored the phases and amplitudes of previous calibration carriers, is updated with the phase and amplitude of the calibration signal on the $n^{th}$ carrier at an $n^{th}$ address. In step 1007, this operation is repeated for all carriers. Then the calibration signals are interpolated using the stored phases and amplitudes of the calibration carriers in step 1003. After eliminating coupler characteristics from the calibration signal, a calibration vector is computed for each carrier in step 1004.

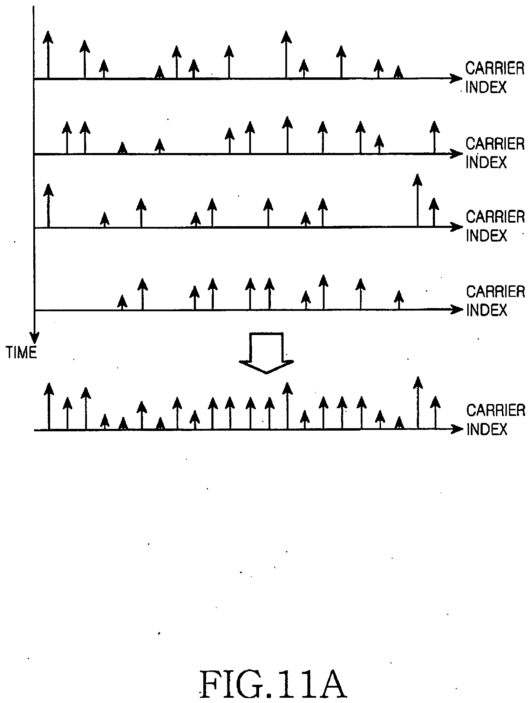

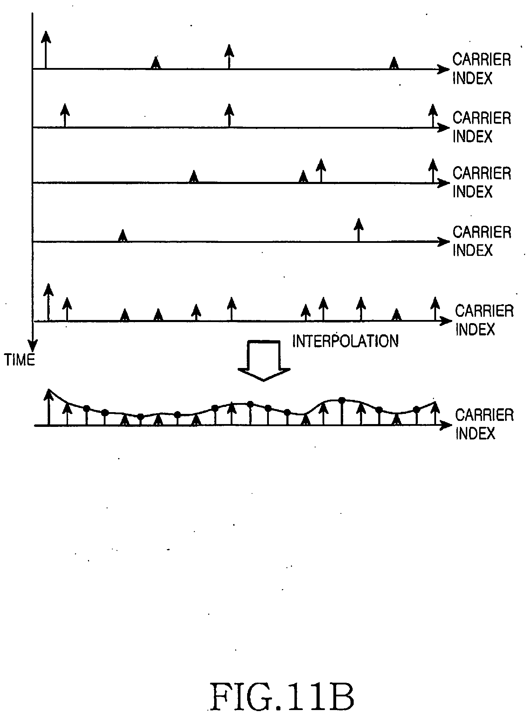

FIGs. 11A and 11B illustrate the values of feedback calibration signals in the smart antenna system according to the present invention. In the illustrated case of FIG. 11A, a calibration signal is transmitted for a predetermined time of period and fed back. By storing the feedback calibration signals received for the period of time, a signal can be calibrated across a total frequency band. Since the system knows the phase and amplitude of the transmitted calibration signal, it can compute calibration vectors by comparing the value of the transmitted calibration signal with that of the feedback calibration signal. Thus, the phase and amplitude of a signal can be calibrated using the calibration vectors. In the case where a small number of users are connected to a BS, this method is applicable.

In the illustrated case of FIG 11B, the calibration signal is not transmitted across the total frequency band and thus the values of feedback calibration signals are estimated by interpolation. This method is available when a large number of users are connected to the BS and more data carriers are needed. Also, since the system knows the phase and amplitude of the transmitted calibration signal, it can compute calibration vectors by comparing the value of the transmitted calibration signal with that of the feedback calibration signal. Thus, the phase and amplitude of a signal can be calibrated using the calibration vectors.

In accordance with the present invention as described above, a calibration signal is allocated to the remaining carriers after allocating carriers to a data signal, prior to transmission in a smart antenna multicarrier communication system. Thus, the efficiency of frequency resources for data transmission is increased.

**Claims**

1.   A smart antenna communication system comprising:

   a scheduler (412) for allocating a data signal to a plurality of carriers as data carriers, providing the data signal to a baseband processor (411), and controlling a calibration processor and controller (410) to generate a calibration signal to be allocated to non-data carriers to which the data signal is not allocated;
   the calibration processor and controller generating the calibration signal on the non-data carriers under the control of the scheduler, and calculating a calibration vector using the calibration signal and a feedback calibration signal, being the calibration signal passed through a transmission path; and a baseband processor (411) for calibrating a beamforming weight vector for a data signal with the calibration vector and transmitting the calibrated data signal in the transmission path;
   **characterized in that** a time threshold is predetermined so that, unless a specific carrier to which the calibration signal was allocated has the calibration signal applied again within that time threshold, the calibration signal is forcibly allocated to the carrier so that the calibration signal is allocated across the total frequency band periodically.

2.   The smart antenna communication system of claim 1, wherein the calibration processor and controller further comprises:

   a calibration signal generator (413) for generating the calibration signal on the non-data carriers under the control of the scheduler; and
   a calibration vector processor (414) for calculating the calibration vector using the calibration signal and the feedback calibration signal.

3.   The smart antenna communication system of claim 2, wherein the calibration signal generator comprises:

   a calibration signal allocater (701) for allocating the calibration signal to the non-data carriers according to carrier-data allocation information received from the scheduler; and
   a first inverse fast Fourier transform, IFFT, processor (702) for modulating the calibration signal received from the calibration signal allocater by IFFT.

4. The smart antenna communication system of claim 2 or 3, wherein the calibration vector processor comprises:

a fast Fourier transform, FFT, processor for separating the feedback calibration signal by carriers;
a calibration signal acquirer (802) for measuring the phases and amplitudes of the calibration signal on the non-data carriers to which the calibration signal is allocated, based on calibration carrier position information received from the scheduler;
a calibration signal updater (803) for updating a memory with the phase and amplitude measurements; and
a calibration vector calculator (805) for eliminating coupler characteristics from the phase and amplitude measurements stored in the memory and calculating a calibration vector using the coupler characteristics from phase and amplitude measurements.

5. The smart antenna communication system of claim 4, further comprising an interpolator (804) for estimating the phases and amplitudes of the calibration signal on carriers to which the calibration signal is not allocated by interpolating the phase and amplitude measurements stored in the memory, and storing the estimated phased and amplitudes of the calibration signal in the memory.

6. The smart antenna communication system of claim 1, wherein the scheduler comprises:

a carrier-set finder (601) for finding carriers having timer values not exceeding a threshold as data carriers;
a data allocater (603) for allocating the data signal to the data carriers; and
a timer (602) for updating timer values for the data carriers.

7. The smart antenna communication system of claim 1, wherein the baseband processor comprises:

a data mapper (504) for receiving the data signal allocated to the data carriers by the scheduler;
a calibrator (503) for applying the calibration vector received from the calibration vector processor to the data signal; and
a second IFFT processor (501) for modulating the data signal received from the calibrator by IFFT.

8. The smart antenna communication system of claim 1, wherein the smart antenna communication system is an Orthogonal Frequency Division Multiplexing, in the following referred to as OFDM, or an Orthogonal Frequency Division Multiple Access, in the following referred to as OFDMA, communication system.

9. A smart antenna communication system comprising:

a scheduler (412) for controlling a calibration signal generator to generate a calibration signal to be allocated to non-data carriers other than data carriers on which a data signal is received from a mobile station;
a calibration processor and controller (410) for allocating the calibration signal on the non-data carriers under the control of the scheduler and calculating a calibration vector using the calibration signal and a feedback calibration signal being the calibration signal passed through a reception path; and
a baseband processor (411) for calibrating a beamforming weight vector for a data signal with the calibration vector and transmitting the calibrated data signal in the reception path;
**characterized in that** a time threshold is predetermined so that, unless a specific carrier to which the calibration signal was allocated has the calibration signal applied again within that time threshold, the calibration signal is forcibly allocated to the carrier so that the calibration signal is allocated across the total frequency band periodically.

10. The smart antenna communication system of claim 9, wherein the calibration processor and controller comprises:

the calibration signal generator (413) for generating the calibration signal on the non-data carriers under the control of the scheduler; and
a calibration vector processor (414) for calculating the calibration vector using the calibration signal and the feedback calibration signal.

11. The smart antenna communication system of claim 10, wherein the smart antenna communication system is an OFDM (Orthogonal Frequency Division Multiplexing) or an OFDMA (Orthogonal Frequency Division Multiple Access) communication system.

**12.** A signal calibration method in a smart antenna communication system, comprising the steps of:

allocating a data signal to a plurality of carriers as data carriers;
allocating a calibration signal to non-data carriers to which the data signal is not allocated and transmitting the calibration signal in a transmission path;
calculating a calibration vector using the calibration signal and a feedback calibration signal received from the transmission path; and
calibrating a beamforming weight vector for the data signal using the calibration vector and transmitting the calibrated data signal in the transmission path;
**characterized in that** a time threshold is predetermined so that, unless a specific carrier to which the calibration signal was allocated has the calibration signal applied again within that time threshold, the calibration signal is forcibly allocated to the carrier so that the calibration signal is allocated across the total frequency band periodically.

**13.** The signal calibration method of claim 12, wherein the calibration signal allocation and transmission step comprises:

allocating the calibration signal to the non-data carriers; and
modulating the allocated calibration signal.

**14.** The signal calibration method of claim 12, wherein the calibration and transmission step comprises:

receiving the data signal on each of the data carriers;
applying the calibration vector to the data signal; and
modulating the data signal to which the calibration vector is applied.

**15.** The signal calibration method of claim 12 or 13, wherein the calculation step comprises the steps of:

separating the feedback signal by carriers;
measuring the phases and amplitudes of the calibration signal on the non-data carriers to which the calibration signal is allocated based on calibration carrier position information;
updating a memory with the phase and amplitude measurements; and
eliminating coupler characteristics from the phase and amplitude measurements stored in the memory and calculating a calibration vector using the coupler characteristics-free from phase and amplitude measurements.

**16.** The signal calibration method of claim 15, wherein the memory updating step comprises estimating the phases and amplitudes of the calibration signal on carriers to which the calibration signal is not allocated by interpolating the phase and amplitude measurements stored in the memory, and storing the estimated phased and amplitudes of the calibration signal in the memory.

**17.** The signal calibration method of claim 12, wherein the step of allocating a calibration signal to non-data carriers further comprises the steps of:

comparing a timer value of the $n^{th}$ carrier with a timer threshold (Time_threshold);
excluding the $n^{th}$ carrier as unavailable as a data carrier if timer value of the $n^{th}$ carrier is greater than the threshold;
allocating data on the $n^{th}$ carrier if timer value of the $n^{th}$ carrier is not greater than the timer threshold;
allocating a calibration signal on the $n^{th}$ carrier if data is not allocated in the step of allocating data.

**18.** The signal calibration method of claim 12, wherein the step of calculating a calibration vector further comprises the steps of:

receiving a feedback calibration signal on a carrier to which a calibration signal is allocated;
updating a memory having the values of the feedback calibration signal received on previous carriers with the value of the feedback calibration signal;
repeating the reception step and the updating step for all carriers of a symbol; and
calculating a calibration vector for each of the carriers using the values of the feedback calibration signal stored in the memory.

**19.** The signal calibration method of claim 18, further comprising eliminating a coupler characteristic from the values of the feedback calibration signal stored in the memory and calculating the calibration vector for the each carrier.

20. The signal calibration method of claim 18, further comprising calculating the calibration vector for the each carrier by estimating the values of the feedback calibration signal on carriers to which the calibration signal is not allocated.

## Patentansprüche

1. Intelligentes Gruppenantennensystem, umfassend:

einen Planer (412) zur Zuteilung eines Datensignals an eine Vielzahl an Trägern als Datenträger, zur Bereitstellung des Datensignals für einen Basisbandprozessor (411), und zur Steuerung eines Kalibrierprozessors und Controllers (410), um ein Kalibriersignal zu erzeugen, das Nichtdatenträgern zugeteilt werden soll, denen das Datensignal nicht zugeteilt wird;
wobei der Kalibrierprozessor und Controller das Kalibriersignal auf den Nichtdatenträgern unter Steuerung des Planers erzeugt, und einen Kalibriervektor unter Verwendung des Kalibriersignals und eines Rückkopplungskalibriersignals, das das Kalibriersignal ist, das einen Übertragungspfad durchlaufen hat, berechnet; und
einen Basisbandprozessor (411) zur Kalibrierung eines Beamforming-Gewichtsvektors für ein Datensignal mit dem Kalibriervektor und zur Übertragung des kalibrierten Datensignals in dem Übertragungspfad;
**dadurch gekennzeichnet, dass**
eine Zeitschwelle so vorgegeben wird, dass, sofern nicht ein spezifischer Träger, dem das Kalibriersignal zugeteilt wurde, das Kalibriersignal innerhalb der Zeitschwelle erneut angewandt hat, das Kalibriersignal dem Träger zwangsweise zugeteilt wird, so dass das Kalibriersignal periodisch über das gesamte Frequenzband zugeteilt wird.

2. Intelligentes Gruppenantennensystem nach Anspruch 1, wobei der Kalibrierprozessor und Controller des Weiteren umfasst:

einen Kalibriersignalgenerator (413) zur Erzeugung des Kalibriersignals auf den Nichtdatenträgern unter Steuerung des Planers; und
einen Kalibriervektorprozessor (414) zur Berechnung des Kalibriervektors unter Verwendung des Kalibriersignals und des Rückkopplungskalibriersignals.

3. Intelligentes Gruppenantennensystem nach Anspruch 2, wobei der Kalibriersignalgenerator umfasst:

einen Kalibriersignal-Zuteiler (701) zur Zuteilung des Kalibriersignals an die Nichtdatenträger gemäß der von dem Planer empfangenen Träger-Datenzuteilungsinformation; und
einen ersten Inverse-schnelle-Fourier-Transformationsprozessor (702), IFFT-Prozessor, zum Modulieren des von dem Kalibriersignal-Zuteiler empfangenen Signals durch den IFFT.

4. Intelligentes Gruppenantennensystem nach Anspruch 2 oder 3, wobei der Kalibriervektorprozessor umfasst:

einen Schnelle-Fourier-Transformationsprozessor (FFT-Prozessor) zum Trennen des Rückkopplungskalibriersignals durch Träger;
einen Kalibriersignalerwerber (802) zum Messen der Phasen und Amplituden des Kalibriersignals auf den Nichtdatenträgern, denen das Kalibriersignal zugeteilt wird, basierend auf von dem Planer empfangener Kalibierträgerpositionsinformation;
ein Kalibriersignalaktualisierer (803) zum Aktualisieren eines Speichers mit den Phasen-und Amplituden-Messungen; und
einen Kalibriervektorberechner (805) zur Beseitigung von Koppler-Charakteristika aus den in dem Speicher gespeicherten Phasen- und Amplituden-Messungen und zur Berechnung eines Kalibriervektors unter Verwendung der Koppler-Charakteristika aus den Phasen- und Amplituden-Messungen.

5. Intelligentes Gruppenantennensystem nach Anspruch 4, des Weiteren umfassend einen Interpolator (804) zur Ermittlung der Phasen und Amplituden des Kalibriersignals auf Trägern, denen das Kalibriersignal nicht zugeteilt wird, durch Interpolieren der in dem Speicher gespeicherten Phasen- und Amplituden-Messungen, und Speichern der ermittelten Phasen und Amplituden des Kalibriersignals in dem Speicher.

**6.** Intelligentes Gruppenantennensystem nach Anspruch 1, wobei der Planer umfasst:

einen Träger-Satz-Finder (601) zum Auffinden von Trägern mit Zeitgeberwerten, die einen Schwellenwert nicht überschreiten, als Datenträger;
einen Datenzuteiler (603) zum Zuteilen des Datensignals an die Datenträger; und
einen Zeitgeber (602) zur Aktualisierung von Zeitgeberwerten für die Datenträger.

**7.** Intelligentes Gruppenantennensystem nach Anspruch 1, wobei der Basisbandprozessor umfasst:

einen Daten-Mapper (504) zum Empfang des den Datenträgern durch den Planer zugeteilten Datensignals;
einen Kalibrator (503) zur Anwendung des von dem Kalibriervektorprozessor empfangenen Kalibriervektors auf das Datensignal; und
einen zweiten IFFT-Prozessor (501) zur Modulierung des von dem Kalibrator empfangenen Datensignals mittels IFFT.

**8.** Intelligentes Gruppenantennensystem nach Anspruch 1, wobei das intelligente Gruppenantennensystem ein Orthogonales Frequenz-Multiplex- (Orthogonal Frequency Division Multiplexing), nachstehend wird darauf als OFDM Bezug genommen, oder ein Orthogonales Frequenzvielfachzugriff- (Orthogonal Frequency Division Multiple Access), nachstehend wird darauf als OFDMA Bezug genommen, Kommunikationssystem ist.

**9.** Intelligentes Gruppenantennensystem, umfassend:

einen Planer (412) zur Steuerung eines Kalibriersignalgenerators, um ein Kalibriersignal zu erzeugen, das Nichtdatenträger zugeteilt werden soll, die sich von Datenträgern unterscheiden, auf denen ein Datensignal von einer Mobilstation empfangen wird;
einen Kalibrierprozessor und Controller (410) zur Zuteilung des Kalibriersignals auf die Nichtdatenträger unter Steuerung des Planers und zur Berechnung eines Kalibriervektors unter Verwendung des Kalibriersignals und eines Rückkopplungskalibriersignals, das das Kalibriersignal ist, das einen Empfangspfad durchlaufen hat; und
einen Basisbandprozessor (411) zur Kalibrierung eines Beamforming-Gewichtsvektors für ein Datensignal mit dem Kalibriervektor und zur Übertragung des kalibrierten Datensignals in dem Empfangspfad;
**dadurch gekennzeichnet, dass**
eine Zeitschwelle so vorgegeben wird, dass, sofern nicht ein spezifischer Träger, dem das Kalibriersignal zugeteilt wurde, das Kalibriersignal innerhalb der Zeitschwelle erneut angewandt hat, das Kalibriersignal dem Träger zwangsweise zugeteilt wird, so dass das Kalibriersignal periodisch über das gesamte Frequenzband zugeteilt wird.

**10.** Intelligentes Gruppenantennensystem nach Anspruch 9, wobei der Kalibrierprozessor und Controller des Weiteren umfasst:

den Kalibriersignalgenerator (413) zur Erzeugung des Kalibriersignals auf den Nichtdatenträgern unter Steuerung des Planers; und
einen Kalibriervektorprozessor (414) zur Berechnung des Kalibriervektors unter Verwendung des Kalibriersignals und des Rückkopplungskalibriersignals.

**11.** Intelligentes Gruppenantennensystem nach Anspruch 10, wobei das intelligente Gruppenantennensystem ein OFDM- (Orthogonal Frequency Division Multiplexing) oder ein OFDMA- (Orthogonal Frequency Division Multiple Access) Kommunikationssystem ist.

**12.** Signalkalibrierungsverfahren in einem intelligenten Gruppenantennensystem, das die nachstehenden Schritte umfasst:

Zuteilung eines Datensignals an eine Vielzahl an Trägern als Datenträger:

Zuteilung eines Kalibriersignals an Nichtdatenträgern, denen das Datensignal nicht zugeteilt wird, und Übertragung des Kalibriersystems in einem Übertragungspfad:

Berechnung eines Kalibriervektors unter Verwendung des Kalibriersignals und eines Rückkopplungskalibriersignals, das von dem Übertragungspfad empfangen wurde; und

Kalibrierung eines Beamforming-Gewichtsvektors für das Datensignal unter Verwendung des Kalibriervektors und Übertragung des kalibrierten Datensignals in dem Übertragungspfad;
**dadurch gekennzeichnet, dass**
eine Zeitschwelle so vorgegeben wird, dass, sofern nicht ein spezifischer Träger, dem das Kalibriersignal zugeteilt wurde, das Kalibriersignal innerhalb der Zeitschwelle erneut angewandt hat, das Kalibriersignal dem Träger zwangsweise zugeteilt wird, so dass das Kalibriersignal periodisch über das gesamte Frequenzband zugeteilt wird.

**13.** Signalkalibrierungsverfahren nach Anspruch 12, wobei der Kalibrierungssignalzuteilungs-und Übertragungsschritt umfasst:

Zuteilung des Kalibriersignals an die Nichtdatenträger; und
Modulieren des zugeteilten Kalibriersignals.

**14.** Signalkalibrierungsverfahren nach Anspruch 12, wobei der Kalibrierungs- und Übertragungsschritt umfasst:

Empfangen des Datensignals auf jedem der Datenträger;
Anwenden des Kalibriervektors auf das Datensignal; und
Modulierung des Datensignals, auf das der Kalibriervektor angewandt wird.

**15.** Signalkalibrierungsverfahren nach Anspruch 12 oder 13, wobei der Berechnungsschritt die nachstehenden Schritte umfasst:

Trennen des Rückkopplungssignals durch Träger;
Messen der Phasen und Amplituden des Kalibriersignals auf den Nichtdatenträgern, denen das Kalibriersignal zugeteilt wird, auf Grundlage von Kalibrierungsträgerpositionsinformation;
Aktualisieren eines Speichers mit den Phasen- und Amplituden-Messungen; und
Beseitigung von Koppler-Charakteristika aus den in dem Speicher gespeicherten Phasen- und Amplituden-Messungen und Berechnung eines Kalibriervektors unter Verwendung der Koppler-Charakteristika-frei von Phasen- und Amplituden-Messungen.

**16.** Signalkalibrierungsverfahren nach Anspruch 15, wobei der Speicheraktualisierungsschritt die Ermittlung der Phasen und Amplituden des Kalibriersignals auf Trägern, denen das Kalibriersignal nicht zugeteilt wird, durch Interpolieren der in dem Speicher gespeicherten Phasen- und Amplituden-Messungen, und Speichern der ermittelten Phasen- und Amplituden des Kalibriersignals in dem Speicher umfasst.

**17.** Signalkalibrierungsverfahren nach Anspruch 12, wobei der Schritt der Zuteilung eines Kalibriersignals an Nichtdatenträger des Weiteren die nachstehenden Schritte umfasst:

Vergleichen eines Zeitgeberwertes des $n^{ten}$ Trägers mit einem Zeitgeber-Schwellenwert (Zeit_Schwellenwert);
Ausschließen des $n^{ten}$ Trägers als nicht-verfügbar als Datenträger, wenn der Zeitgeberwert des $n^{ten}$ Trägers größer als der Schwellenwert ist:

Zuteilung von Daten auf den $n^{ten}$ Träger, wenn der Zeitgeberwert des $n^{ten}$ Trägers nicht größer als der Zeitgeber-Schwellenwert ist;
Zuteilung eines Kalibriersignals auf dem $n^{ten}$ Träger, wenn Daten in dem Schritt der Zuteilung von Daten nicht zugeteilt werden.

**18.** Signalkalibrierungsverfahren nach Anspruch 12, wobei der Schritt der Berechnung eines Kalibriervektors des Weiteren die nachstehenden Schritte umfasst:

Empfangen eines Rückkopplungskalibriersignals auf einem Träger, dem ein Kalibriersignal zugeteilt wird;
Aktualisieren eines Speichers, der die Werte des auf vorhergehenden Trägern empfangenen Rückkopplungskalibriersignals aufweist, mit den Werten des Rückkopplungskalibriersignals;
Wiederholen des Empfangsschrittes und des Aktualisierungsschrittes für alle Träger eines Symbols; und
Berechnen eines Kalibriervektors für jeden der Träger unter Verwendung der Werte des in dem Speicher gespeicherten Rückkopplungskalibriersignals.

**19.** Signalkalibrierungsverfahren nach Anspruch 18, das des Weiteren die Beseitigung einer Koppler-Charakteristik aus den in dem Speicher gespeicherten Werten des Rückkopplungskalibriersignals und die Berechnung des Kalibriervektors für jeden Träger umfasst.

**20.** Signalkalibrierverfahren nach Anspruch 18, das des Weiteren die Berechnung des Kalibriervektors für jeden Träger durch die Ermittlung der Werte des Rückkopplungskalibriersignals auf Trägern, denen das Kalibriersignal nicht zugeteilt wird, umfasst.

**Revendications**

**1.** Système de communication à antenne intelligente comprenant :

un ordonnanceur (412) pour attribuer un signal de données à une pluralité de porteuses comme porteuses de données, procurer le signal de données à un processeur de bande de base (411), et contrôler un processeur et contrôleur d'étalonnage (410) pour générer un signal d'étalonnage à attribuer à des porteuses de non-données auxquelles le signal de données n'est pas attribué ;

le processeur et contrôleur d'étalonnage générant le signal d'étalonnage sur les porteuses de non-données sous contrôle de l'ordonnanceur, et calculant un vecteur d'étalonnage en utilisant le signal d'étalonnage et un signal d'étalonnage de rétroaction, qui est le signal d'étalonnage passé par un chemin de transmission ; et

un processeur de bande de base (411) pour étalonner un vecteur de poids de formation de faisceau pour un signal de données avec le vecteur d'étalonnage et transmettre le signal de données étalonné dans le chemin de transmission ;

**caractérisé en ce que**

un seuil de temps est prédéterminé de telle sorte que, à moins qu'une porteuse spécifique à laquelle le signal d'étalonnage a été attribué ne comporte le signal d'étalonnage appliqué de nouveau sans dépasser ce seuil de temps, le signal d'étalonnage est attribué de force à la porteuse de telle sorte que le signal d'étalonnage est attribué périodiquement sur toute la bande de fréquence.

**2.** Système de communication à antenne intelligente selon la revendication 1, dans lequel le processeur et contrôleur d'étalonnage comprend en outre :

un générateur de signal d'étalonnage (413) pour générer le signal d'étalonnage sur les porteuses de non-données sous contrôle de l'ordonnanceur ; et

un processeur de vecteur d'étalonnage (414) pour calculer le vecteur d'étalonnage en utilisant le signal d'étalonnage et le signal d'étalonnage de rétroaction.

**3.** Système de communication à antenne intelligente selon la revendication 2, dans lequel le générateur de signal d'étalonnage comprend :

un dispositif d'attribution de signal d'étalonnage (701) pour attribuer le signal d'étalonnage aux porteuses de non-données conformément à de l'information d'attribution de données de porteuse reçue de l'ordonnanceur ; et

un premier processeur (702) à transformée de Fourier rapide inverse IFFT, soit Inverse Fast Fourier Transform, pour moduler le signal d'étalonnage reçu par l'IFFT en provenance du dispositif d'attribution de signal d'étalonnage.

**4.** Système de communication à antenne intelligente selon la revendication 2 ou 3, dans lequel le processeur de vecteur d'étalonnage comprend :

un processeur à transformée de Fourier rapide FFT, soit Fast Fourier Transform, pour séparer le signal d'étalonnage de rétroaction par porteuses ;

un acquéreur de signal d'étalonnage (802) pour mesurer les phases et amplitudes du signal d'étalonnage sur les porteuses de non-données auxquelles le signal d'étalonnage est attribué, sur base d'information de position de porteuse d'étalonnage reçue de l'ordonnanceur ;

un système d'actualisation de signal d'étalonnage (803) pour actualiser une mémoire avec les mesures de phase et d'amplitude ; et

un calculateur de vecteur d'étalonnage (805) pour éliminer des caractéristiques de coupleur à partir des mesures de phase et d'amplitude stockées dans la mémoire et calculer un vecteur d'étalonnage en utilisant les caractéristiques de coupleur à partir de mesures de phase et d'amplitude.

5. Système de communication à antenne intelligente selon la revendication 4, comprenant en outre un interpolateur (804) pour estimer les phases et amplitudes du signal d'étalonnage sur des porteuses auxquelles le signal d'étalonnage n'est pas attribué en interpolant les mesures de phase et d'amplitude stockées dans la mémoire, et stocker les phases et amplitudes évaluées du signal d'étalonnage dans la mémoire.

6. Système de communication à antenne intelligente selon la revendication 1, dans lequel l'ordonnanceur comprend :

un dispositif de découverte d'ensemble de porteuses (601) pour trouver des porteuses ayant des valeurs de temporisateur ne dépassant pas un seuil comme porteuses de données ;
un dispositif d'attribution de données (603) pour attribuer le signal de données aux porteuses de données ; et
un temporisateur (602) pour actualiser des valeurs de temporisateur pour les porteuses de données.

7. Système de communication à antenne intelligente selon la revendication 1, dans lequel le processeur de bande de base comprend :

un mappeur de données (504) pour recevoir le signal de données attribué aux porteuses de données par l'ordonnanceur ;
un étalonneur (503) pour appliquer le vecteur d'étalonnage reçu du processeur de vecteur d'étalonnage au signal de données ; et
un deuxième processeur IFFT (501) pour moduler le signal de données reçu par l'IFFT en provenance de l'étalonneur.

8. Système de communication à antenne intelligente selon la revendication 1, dans lequel le système de communication à antenne intelligente est un système de communication à multiplexage par répartition orthogonale en fréquence OFDM, soit Orthogonal Frequency Division Multiplexing, ou à accès multiple par répartition orthogonale en fréquence OFDMA, soit Orthogonal Frequency Division Multiple Access.

9. Système de communication à antenne intelligente comprenant :

un ordonnanceur (412) pour contrôler un générateur de signal d'étalonnage pour générer un signal d'étalonnage à attribuer à des porteuses de non-données autres que des porteuses de données sur lesquelles un signal de données est reçu d'une station mobile ;
un processeur et contrôleur d'étalonnage (410) pour étalonner le signal d'étalonnage sur les porteuses de non-données sous contrôle de l'ordonnanceur, et pour calculer un vecteur d'étalonnage en utilisant le signal d'étalonnage et un signal d'étalonnage de rétroaction, qui est le signal d'étalonnage passé par un chemin de réception ; et
un processeur de bande de base (411) pour étalonner un vecteur de poids de formation de faisceau pour un signal de données avec le vecteur d'étalonnage et transmettre le signal de données étalonné dans le chemin de réception ;
**caractérisé en ce que**
un seuil de temps est prédéterminé de telle sorte que, à moins qu'une porteuse spécifique à laquelle le signal d'étalonnage a été attribué comporte le signal d'étalonnage appliqué de nouveau sans dépasser ce seuil de temps, le signal d'étalonnage est attribué de force à la porteuse de telle sorte que le signal d'étalonnage est attribué périodiquement sur toute la bande de fréquence.

10. Système de communication à antenne intelligente selon la revendication 9, dans lequel le processeur et contrôleur d'étalonnage comprend :

le générateur de signal d'étalonnage (413) pour générer le signal d'étalonnage sur les porteuses de non-données sous contrôle de l'ordonnanceur ; et
un processeur de vecteur d'étalonnage (414) pour calculer le vecteur d'étalonnage en utilisant le signal d'étalonnage et le signal d'étalonnage de rétroaction.

11. Système de communication à antenne intelligente selon la revendication 10, dans lequel le système de communication à antenne intelligente est un système de communication à multiplexage par répartition orthogonale en fréquence OFDM ou à accès multiple par répartition orthogonale en fréquence OFDMA.

**12.** Procédé d'étalonnage de signal dans un système de communication à antenne intelligente, comprenant les étapes suivantes :

attribution d'un signal de données à une pluralité de porteuses comme porteuses de données ;
attribution d'un signal d'étalonnage pour des porteuses de non-données auxquelles le signal de données n'est pas attribué et transmission du signal d'étalonnage dans un chemin de transmission ;
calcul d'un vecteur d'étalonnage en utilisant le signal d'étalonnage et d'un signal d'étalonnage de rétroaction reçu du chemin de transmission ; et
étalonnage d'un vecteur de poids de formation de faisceau pour le signal de données en utilisant le vecteur d'étalonnage, et transmission du signal de données étalonné dans le chemin de transmission ;
**caractérisé en ce que**
un seuil de temps est prédéterminé de telle sorte que, à moins qu'une porteuse spécifique à laquelle le signal d'étalonnage a été attribué comporte le signal d'étalonnage appliqué de nouveau sans dépasser ce seuil de temps, le signal d'étalonnage est attribué de force à la porteuse de telle sorte que le signal d'étalonnage est attribué périodiquement sur toute la bande de fréquence.

**13.** Procédé d'étalonnage de signal selon la revendication 12, dans lequel l'étape d'attribution et de transmission de signal d'étalonnage comprend :

l'attribution du signal d'étalonnage aux porteuses de non-données ; et
la modulation du signal d'étalonnage attribué.

**14.** Procédé d'étalonnage de signal selon la revendication 12, dans lequel l'étape d'étalonnage et de transmission comprend :

la réception du signal de données sur chacune des porteuses de données ;
l'application du vecteur d'étalonnage au signal de données ; et
la modulation du signal de données auquel le vecteur d'étalonnage est appliqué.

**15.** Procédé d'étalonnage de signal selon la revendication 12 ou 13, dans lequel l'étape de calcul comprend les étapes suivantes :

séparation du signal de rétroaction par des porteuses ;
mesure des phases et amplitudes du signal d'étalonnage sur les porteuses de non-données auxquelles le signal d'étalonnage est attribué sur base d'information de position de porteuse d'étalonnage ;
actualisation d'une mémoire avec les mesures de phase et d'amplitude ; et
élimination de caractéristiques de coupleur des mesures de phase et d'amplitude stockées en mémoire et calcul d'un vecteur d'étalonnage en utilisant le caractéristiques de coupleur indépendamment des mesures de phase et d'amplitude.

**16.** Procédé d'étalonnage de signal selon la revendication 15, dans lequel l'étape d'actualisation de mémoire comprend l'estimation des phases et amplitudes du signal d'étalonnage sur des porteuses auxquelles le signal d'étalonnage n'est pas attribué en interpolant les mesures de phase et d'amplitude stockées dans la mémoire, et le stockage des phases et amplitudes évaluées du signal d'étalonnage dans la mémoire.

**17.** Procédé d'étalonnage de signal selon la revendication 12, dans lequel l'étape consistant à attribuer un signal d'étalonnage aux porteuses de non-données comprend en outre les étapes suivantes :

comparaison d'une valeur de temporisateur de la $n^{ième}$ porteuse à un seuil de temporisateur (Time_threshold) ;
exclusion de la $n^{ième}$ porteuse comme étant indisponible comme porteuse de données si la valeur de temporisateur de la $n^{ième}$ porteuse est supérieure au seuil ;
attribution de données sur la $n^{ième}$ porteuse si la valeur de temporisateur de la $n^{ième}$ porteuse n'est pas supérieure au seuil du temporisateur ;
attribution d'un signal d'étalonnage sur la $n^{ième}$ porteuse si des données ne sont pas attribuées à l'étape d'attribution de données.

**18.** Procédé d'étalonnage de signal selon la revendication 12, dans lequel l'étape de calcul d'un vecteur d'étalonnage comprend en outre les étapes suivantes :

réception d'un signal d'étalonnage de rétroaction sur une porteuse à laquelle est attribué un signal d'étalonnage ;

actualisation d'une mémoire ayant les valeurs du signal d'étalonnage de rétroaction reçu sur des porteuses précédentes avec la valeur du signal d'étalonnage de rétroaction ;

répétition de l'étape de réception et de l'étape d'actualisation pour toutes les porteuses d'un symbole ; et

calcul d'un vecteur d'étalonnage pour chacune des porteuses en utilisant les valeurs du signal d'étalonnage de rétroaction stocké dans la mémoire.

19. Procédé d'étalonnage de signal selon la revendication 18, comprenant en outre l'élimination d'une caractéristique de coupleur parmi les valeurs du signal d'étalonnage de rétroaction stocké dans la mémoire et le calcul du vecteur d'étalonnage pour chaque porteuse.

20. Procédé d'étalonnage de signal selon la revendication 18, comprenant en outre le calcul du vecteur d'étalonnage pour chaque porteuse en estimant les valeurs du signal d'étalonnage de rétroaction sur des porteuses auxquelles le signal de calibration n'est pas attribué.

# FIG.1

## PRIOR ART

COUPLER

FEEDBACK PATH

CALIBRATION PATH

$e^{j\theta_{cal}}$

$e^{j\theta_{feedback}}$

$C(t)e^{j\theta_{cal}}e^{j\theta_{feedback}}$

$C(t)$

$C(t)$

$C(t)e^{j\theta_{cal}}e^{j\theta_{feedback}}$

# FIG.2

## PRIOR ART

FIG.3

CARRIER INDEX

CARRIER INDEX

CARRIER INDEX

CARRIER INDEX

CARRIER INDEX

TIME

DATA ALLOCATED

BLANK

EP 1 670 094 B1

FIG.4

FIG.5

EP 1 670 094 B1

FIG.6

701 ~ CALIBRATION SIGNAL ALLOCATER

702 ~ IFFT BLOCK

FIG.7

801 — FFT BLOCK

802 — CALIBRATION SIGNAL ACQUIRER

803 — CALIBRATION SIGNAL UPDATER

804 — INTERPOLATOR

805 — CALIBRATION VECTOR CALCULATOR

FIG.8

FIG.9

START OF SYMBOL

n=1 ~1001

1002
IF n<=N ───YES──→

NO

INTERPOLATED_CALIBRATION
_SINGNAL=INTERPOLATE
(CALIBRATION_SIGNAL) ~1003

CALIBRATION VECTOR
CALCULATION ~1004

1005
CALIBRATION
SIGNAL ALLOCATED TO n-TH
CARRIER?

YES

A=AMPLITUDE OF CALIBRATION
SIGNAL
B=PHASE OF CALIBRATION SIGNAL ~1006
CALIBRATION_SIGNAL(n)
=A*exp(J*B)

n=n+1 ~1007

# FIG.10

FIG.11A

FIG.11B

**REFERENCES CITED IN THE DESCRIPTION**

**Patent documents cited in the description**

- JP 2003273634 A
- US 6208287 B1
- US 5499031 A
- EP 1416655 A